# EUROPÄISCHE PATENTSCHRIFT

(11) **EP 1 288 681 B1**
(45) Veröffentlichungstag und Bekanntmachung des Hinweises auf die Patenterteilung: **25.02.2009**
(21) Anmeldenummer: 02018934.6
(22) Anmeldetag: 23.08.2002
(51) Int. Cl.: G01V 1/145

(54) **Vorrichtung und Verfahren zur Erzeugung mechanischer Schwingungen in Festgestein und Verwendung der selben Vorrichtung**
Device and method for generating mechanical vibrations in rocks and use of said device
Dispositif et méthode de génération de vibrations mécaniques dans des roches

(30) Priorität: 24.08.2001 DE 10141518
(43) Veröffentlichungstag der Anmeldung: 05.03.2003
(73) Patentinhaber: Geoforschungszentrum Potsdam, 14473 Postdam (DE)
(72) Erfinder: Borm, Günter, Prof., 76227 Karlsruhe (DE); Otto, Peter, 14471 Potsdam (DE)
(74) Vertreter: Hertz, Oliver

(56) Entgegenhaltungen:
- EP-A- 0 569 735
- EP-A- 1 085 347
- FR-A- 1 132 620
- US-A- 5 357 063
- US-A- 5 852 262
- HOUQING Z ET AL: "Applications of Terfenol-D in China" JOURNAL OF ALLOYS AND COMPOUNDS, ELSEVIER SEQUOIA, LAUSANNE, CH, Bd. 258, 1. August 1997 (1997-08-01), Seiten 49-52, XP004160935 ISSN: 0925-8388

## Beschreibung

Die Erfindung betrifft eine Vorrichtung und ein Verfahren zur Erzeugung mechanischer Schwingungen in Festgestein mit einem in einem Gehäuse angeordneten, elektrisch angetriebenen Schwingungsgeber.

Bisher allgemein bekannte Verfahren zur Erzeugung mechanischer Schwingungen in Festgestein z. B. für geophysikalische Untersuchungen basieren auf der Auslösung einer Sprengung. Diese Verfahren haben jedoch den Nachteil, dass sie eine Unterbrechung von Betriebs- oder Produktionsabläufen bedingen. Ebenfalls aus der Praxis bekannte sogenannte LKW-Schwinger arbeiten mit einem auf einem Fahrzeug angebrachten Schwingungsgenerator. Diese Systeme weisen ein großes Gewicht auf und sind beispielsweise in engen Tunneln wegen ihrer großen Abmessungen nicht einsetzbar. Ein genereller Nachteil der bisher bekannten, für Festgestein eingesetzten Vorrichtungen besteht darin, dass die Signalform weder variierbar noch reproduzierbar ist. Auch werden diese Verfahren durch Störsignale, die sich in der näheren Umgebung der Signalquelle befinden, leicht beeinflusst.

Die DE 199 44 032 A1 beschreibt eine Vorrichtung und ein Verfahren zur Erzeugung seismischer Schwingungen, wobei eine Schlagmasse von einer Antriebseinrichtung hin- und herbewegt wird. Nachteilig bei dieser Vorrichtung ist jedoch, dass sie eine breitbandige Anregung erzeugt und dass für eine hohe Eindringtiefe eine hohe Leistung erforderlich ist. Außerdem sind die mechanischen Bauteile im dauerhaften Betrieb verschleiß- und störanfällig. Sie erfordern somit einen relativ hohen Wartungsaufwand.

Andere aus der Praxis bekannte Verfahren arbeiten mit einem pneumatisch angetriebenen Hammer. Diese Vorrichtungen liefern jedoch ebenfalls Signale mit einer relativ großen Bandbreite. Ferner ist hier für ein tiefes Eindringen des Signals in das zu untersuchende Festgestein eine hohe Leistung erforderlich. Auch ist der mechanische Aufbau solcher pneumatisch angetriebenen Hämmer bei ständigem Betrieb sehr störanfällig.

Aus der Praxis sind elektrodynamische Schwingungsgeber bekannt, die mit hin- und herschwingenden Massen arbeiten, wobei diese Schwingungsgeber jedoch nur eine geringe Leistung liefern. Sie sind somit nicht für Festgestein geeignet, sondern nur für Lockerböden und wassergesättigte Böden.

Cutler et al. beschreiben im "Sandia Report" (Sand 97-0944, UC 403, April 1997) eine seismische Bohrlochquelle, die einen magnetostriktiven Schwingungsgeber aufweist. Diese Quelle wird zum Betrieb seitlich an eine Bohrlochwand geklammert, um vertikal polarisierte Scherwellen im umgebenden Gestein zu erzeugen. Dieses System besitzt einen beschränkten Anwendungsbereich zur Schwingungserzeugung in engen Bohrlöchern. Es ist beispielsweise nicht für Gebirgserkundungen im Tunnel geeignet. Die WO 99/39846 beschreibt eine auf dem im "Sandia Report" genannten Prinzip beruhende Vorrichtung zur Erkundung von Öl- und Gasspeicherlagerstätten. Diese Vorrichtung strahlt Kompressionswellen seitlich ab und eignet sich somit ebenfalls nicht zur Gebirgserkundung im Tunnel.

Die Erfindung hat die Aufgabe, eine Vorrichtung der eingangs genannten Art dahingehend zu verbessern, dass die o.g. Nachteile vermieden werden und die erzeugten Signale variierbar und reproduzierbar sind. Die Aufgabe der Erfindung ist es auch, ein verbessertes Verfahren zur Schwingungserzeugung insbesondere für geophysikalische Untersuchungen anzugeben.

Diese Aufgabe wird durch eine Vorrichtung gemäß Anspruch 1 und durch ein Verfahren gemäß Anspruch 14 gelöst. Vorteilhafte Ausführungsformen und Anwendungen der Erfindung ergeben sich aus den abhängigen Ansprüchen.

Die Grundidee der Erfindung ist es, insbesondere als Signalgenerator für geophysikalische Untersuchungen eine Vorrichtung zur Erzeugung mechanischer Schwingungen in einem Festgestein mit einem elektrisch angetriebenen Schwingungserzeuger, der ein axial wirkender, magnetostriktiver Schwingungsgeber ist, und mit einer Vorspanneinrichtung bereitzustellen, mit der der Schwingungserzeuger relativ zum Gehäuse und zum Festgestein mit einem vorbestimmten, einstellbaren Anpressdruck angeordnet werden kann. Der magnetostriktive Schwingungsgeber ermöglicht die Erzeugung von Anregungsschwingungen mit einstellbaren, variierbaren und reproduzierbaren Parametern, so dass insbesondere eine verbesserte Trennung von Störsignalen möglich sind. Ferner erzeugt die Vorrichtung Kompressionswellen (akustische Wellen), die sich in Längsrichtung der Vorrichtung ausbreiten, weshalb sie besonders gut zur Untersuchung von Felsgestein geeignet sind. Vorteilhafterweise handelt es sich bei dem magnetostriktiven Schwingungsgeber um ein Bauteil mit verhältnismäßig geringer Masse. Somit müssen mit der erfindungsgemäßen Vorrichtung nicht mehr große Massen in Schwingung versetzt werden. Der Wirkungsgrad der gesamten Vorrichtung wird durch den Wegfall großer hin- und herbewegter Massen erheblich verbessert. Ferner sind die durch die Verwendung mechanischer Bauteile verursachte Störanfälligkeit und der Verschleiß erheblich reduziert, wodurch ein wirtschaftlicher Einsatz auch über lange Einsatzdauern hinweg sichergestellt ist. Ein besonderer Vorteil des erfindungsgemäß verwendeten Schwingungsgebers besteht in der Schwingungserzeugung mit vergleichsweise geringer Frequenzbandbreite. Im Unterschied zu herkömmlichen Systemen ist erfindungsgemäß bei geringerer Leistung eine höhere Eindringtiefe erzielbar. Die erfindungsgemäß vorgesehene Vorspanneinrichtung besitzt den Vorteil, dass der Schwingungserzeuger bei der Schwingungsanregung laufend in mechanischem Kontakt mit dem Festgestein bleibt und die erzeugten Schwingungen effektiv in das Festgestein übertragen werden.

Wenn die Amplitude durch eine vorbestimmte Einstellung der Leistung entsprechend dem zu untersuchenden Festgestein ausgewählt wird und/oder die Frequenz und/oder der Frequenzverlauf im Rahmen einer dynamischen Messung variiert werden, ist vorteilhafterweise eine verbesserte Trennung von Störsignalen möglich. Besonders gute Ergebnisse erzielt man im Frequenzbereich zwischen 0,2 kHz und 2 kHz.

Werden mit der Vorrichtung durch mehrfaches Abstrahlen und empfängerseitiges Überlagern (Übereinanderlegen, Addieren) der vom untersuchten Festgestein rückgestreuten Schwingungs-Signale sogenannte Stapelsignale erzeugt, dann kann das Signal-Rausch-Verhältnis weiter verringert werden.

Gemäß einer bevorzugten Ausführungsform der Erfindung ist am Gehäuse der Vorrichtung zur Schwingungserzeugung an der dem Festgestein zugewandten Seite eine Übertragungseinrichtung zur Einleitung der erzeugten Schwingungen in das Festgesteinangeordnet. Dies besitzt den Vorteil einer verbesserten und störungsärmeren Übertragung der vom Schwingungsgeber erzeugten Schwingungen auf das zu untersuchende Festgestein, wobei gleichzeitig der hochwertige magnetostriktive Schwingungsgeber mechanisch geschützt wird.

An der Übertragungseinrichtung kann vorteilhafterweise ein Schwingungsaufnehmer angebracht sein, mit dem die erzeugten Schwingungen detektiert werden können. Der Schwingungsaufnehmer kann Bezugssignale und/oder Triggersignale für die Auswertung von aus dem Festgestein rückgestreuten Schwingungen liefern.

Vorteilhafterweise kann die erfindungsgemäße Vorrichtung tragbar gebildet sein, so dass sie von einer Person jederzeit unabhängig von zusätzlichen Beförderungseinrichtungen an jeden beliebigen Ort getragen werden kann.

Zur Schwingungserzeugung in einem zu untersuchenden Festgestein wird die erfindungsgemäße Vorrichtung mit einem vorbestimmten Anpressdruck an das Festgestein gedrückt. Vorteilhafterweise kann sie hierzu mit einem Gestell an einer Arbeitsmaschine angebracht sein, die das Widerlager für den Anpressdruck bilden. Wenn die Vorrichtung verschiebbar und/oder schwenkbar mit dem Gestell, der Baumaschine oder dem Bagger oder dergleichen verbunden ist, ermöglicht dies eine optimale Anpressung der Vorrichtung gegen das zu untersuchende Festgestein.

Zur Feineinstellung des Anpressdrucks der Vorrichtung gegen das zu untersuchende Festgestein kann das Gehäuse teleskopartig auseinander- und zusammenschiebbar sein. Ferner ist sie mit einer Feder und/oder einem Pneumatikzylinder ausgestattet, so dass der Schwingungsgeber optimal vorgespannt wird. Der Pneumatikzylinder kann außerdem zur Verschiebung und Positionierung der Übertragungseinrichtung dienen.

Um die dynamischen Reaktions- und Vorspannkräfte auszugleichen, kann die Vorrichtung mit mindestens einer Ausgleichsmasse versehen sein, wobei die mindestens eine Ausgleichsmasse zur Verstärkung des Ausgleichseffektes mit mindestens einer Feder oder mindestens einem Pneumatikzylinder verbunden sein kann.

Die Vorrichtung kann zur Optimierung der Anregung des zu untersuchenden Festgesteins ein Längenmesssystem, ggf. mit einer Führungseinrichtung, aufweisen. Das Längenmesssystem hilft, unerwünschte und für den Schwingungsgeber schädliche Betriebszustände zu vermeiden, so dass die Vorrichtung nicht bei nicht auf das zu untersuchende Festgestein aufgesetzter Übertragungseinrichtung oder nicht mit unzureichender Vorspannung des Schwingungsgebers betrieben wird. Außerdem gestattet das Längenmesssystem eine Steuerung der Amplitude der Anregungsschwingungen.

Gegenstand der Erfindung ist auch ein Verfahren zur Erzeugung mechanischer Schwingungen in Festgestein mit einer erfindungsgemäßen Vorrichtung, gekennzeichnet durch folgende Schritte:
- Anlegen der Vorrichtung an das zu untersuchende Festgestein,
- Vorspannen des Schwingungsgebers, und
- Aktivieren des Schwingungsgebers.

Weitere Vorteile und Einzelheiten der Erfindung ergeben sich aus der folgenden Beschreibung der beigefügten Zeichnungen. Es zeigen:
- Fig. 1: einen Längsschnitt durch eine erste Ausführungsform einer erfindungsgemäßen Vorrichtung; und
- Fig. 2: einen Längsschnitt durch eine zweite Ausführungsform einer erfindungsgemäßen Vorrichtung.

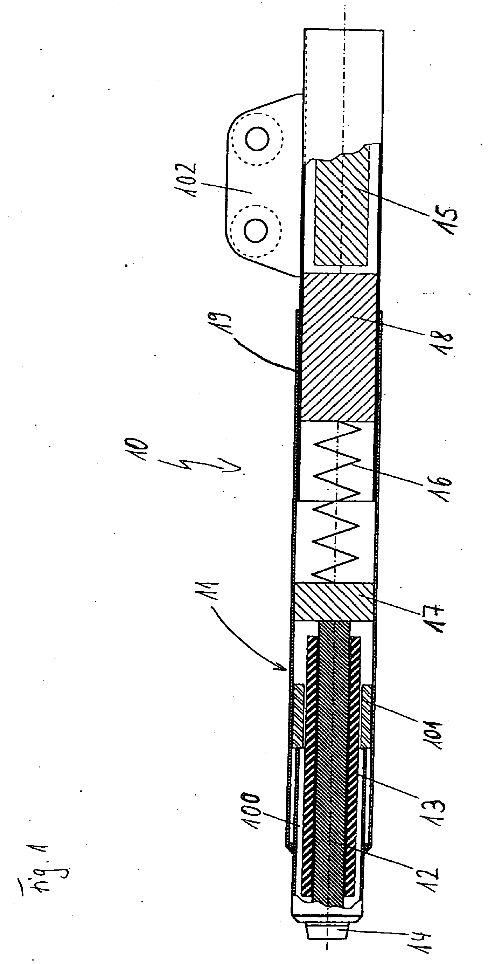

Fig. 1 zeigt eine Vorrichtung 10 zur Erzeugung mechanischer Schwingungen in Festgestein. Sie weist zur Schwingungserzeugung einen in einem rohrförmigen Gehäuse 11 angeordneten, in einer Spule 13 fixierten magnetostriktiven Schwingungsgeber 12 auf. Der magnetostriktive Schwingungsgeber ist eine an sich bekannte, kommerziell verfügbare Komponente. Er besteht aus einem magnetostriktiven Material, das unter Einwirkung eines äußeren Magnetfeldes eine materialspezifische Längenänderung und/oder Verspannung bildet. Der Schwingungsgeber besitzt vorzugsweise die Form eines Stabes oder Zylinders mit einer Länge von z. B. 30 cm und einem Durchmesser von z. B. 50 mm. Unter der Einwirkung eines von der Spule 13 erzeugten periodisch veränderlichen Magnetfelds dehnt sich der axial angeordnete magnetostriktive Schwingungsgeber 12 periodisch aus und geht wieder auf seine Anfangslänge zurück. Wird die Vorrichtung 10 mit einer Übertragungseinrichtung 14 auf das zu untersuchende Festgestein aufgelegt, so regt der Schwingungsgeber 12 mittels der Übertragungseinrichtung 14 das zu untersuchende Material zum Schwingen an. Die Schwingungsanregung erfolgt axial, d. h. entsprechend der Längsrichtung der Vorrichtung 10.

Da der magnetostriktive Schwingungsgeber 12 nur eine relativ kleine Masse aufweist, die sich nur um verhältnismäßig kleine Amplituden verlängert, kann der Schwingungsgeber 12 auch mit sehr hohen Frequenzen schwingen, wozu bisher bekannte gattungsgemäße Vorrichtungen, die mit hin- und herschwingenden Massen arbeiten, nicht fähig sind. Somit kann der Schwingungsgeber 12 ein Frequenzband von sehr hohen bis zu niedrigen Frequenzen durchlaufen, wobei auch noch die Amplitude durch Einstellung einer Leistungseinheit 15 auf einen bestimmten Wert beliebig variierbar ist. Folglich kann der Schwingungsgeber 12 diskrete Einzelsignale einer bestimmten Frequenz oder auch kontinuierliche Signalfolgen über einen ausgewählten Frequenzbereich erzeugen. Die Einstellung definierter Frequenzen oder Frequenzfolgen "sweeps" oder ("chirps") besitzt den Vorteil, dass bei der Analyse der Reaktion des untersuchten Festgesteins auf die Schwingungsanregung Störsignale besser erkannt und unterdrückt werden können.

Der Schwingungsgeber 12 und die Spule 13 sind in einem Gehäuse 11 untergebracht, das einerseits die Übertragungseinrichtung 14 trägt und andererseits mit einem Grundkörper verbunden ist, der eine Masse 18 und die Leistungseinheit 15 enthält. Das Gehäuse 11 ist elastisch und verschiebbar am Grundkörper befestigt, der über eine Befestigungseinrichtung 102 an einer (äußeren) Vorspanneinrichtung (nicht dargestellt), z. B. einem Gestell, einer ggf. mobilen Arbeitsmaschine, einer Tunnelbohrmaschine, einem Bagger, einer Seilverspannung oder dgl. angebracht ist, die ein Widerlager für die Vorrichtung 10 bildet. Die Vorspanneinrichtung ist ortsfest in der Umgebung des Ortes der Schwingungsanregung positioniert und dient der Aufbringung des Anpressdruckes während der Schwingungsanregung. Die Seilverspannung umfasst beispielsweise Anker und ein Drahtseil, die am Gestein und der Befestigungseinrichtung 102 angebracht sind und mit denen die Vorrichtung 10 mit einer vorbestimmten Kraft gegen das Gestein pressbar ist.

Durch eine ebenfalls als (innere) Vorspanneinrichtung wirkende Feder 16 wird der Schwingungsgeber 12 mit der Übertragungseinrichtung 14 elastisch gegen das hier nicht näher dargestellte Festgestein gedrückt und somit relativ zum Grundkörper vorgespannt, um Beschädigungen des Schwingungsgebers 12 bei nicht angepresster oder nicht genügend angepresster Vorrichtung 10 zu vermeiden. Aus dem selben Grund weist das Gehäuse 11 zwei teleskopartig ineinandergesteckte Gehäuseteile 19 und 100 auf. Somit kann durch entsprechendes Auseinanderfahren der Gehäuseteile 19 und 100 eine optimale Vorspannung des Schwingungsgebers 12 erzielt werden.

Ein Längenmesssystem 101 dient ebenfalls der Vermeidung einer Inbetriebnahme der Vorrichtung 10 bei nicht vorgespanntem oder nicht genügend vorgespanntem Schwingungsgeber 12. Ferner gestattet das Längenmesssystem 101 eine Steuerung der Schwingungsamplitude. Massen 17 und 18 fangen zusammen mit der Feder 16 die im Betrieb entstehenden dynamischen Reaktionskräfte der Vorrichtung 10 ab. Das Längenmesssystem 101 ist gegebenenfalls mit einer Führungseinrichtung für die Gehäuseteile ausgestattet.

An der Übertragungseinrichtung kann ein Schwingungsaufnehmer (nicht dargestellt) angebracht sein, der z. B. mindestens einen piezoelektrischen Schwingungssensor umfasst. Mit dem Schwingungssensor werden beispielsweise die Frequenz(en) oder die Amplitude(n) der erzeugten Schwingungen erfasst.

Am Ende des Gehäuses 11 kann ein weiterer Schwingungsaufnehmer angebracht sein, der die bei der Schwingungserzeugung am Gehäuse entstehenden Schwingungen erfasst. Diese Schwingungen sind durch eine komplexe Überlagerung von Resonanzen des Gehäuses geprägt, sie können bei der Auswertung der aus dem Gestein rückgestreuten Schwingungen berücksichtigt werden.

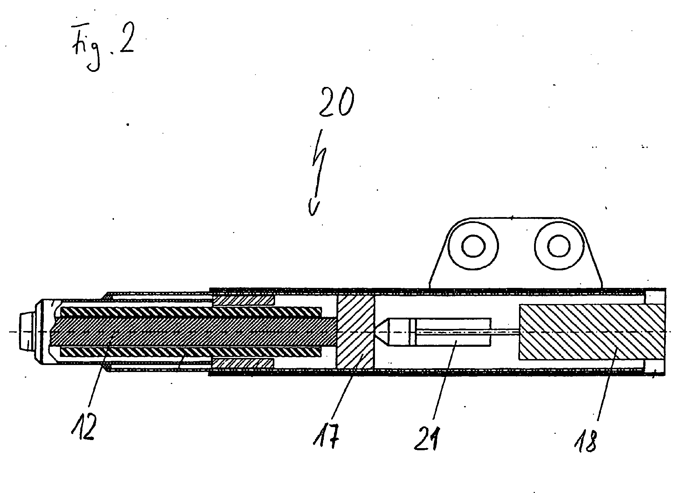

Fig. 2 zeigt eine Vorrichtung 20, die statt der Feder 16 aus Fig. 1 als weitere elastische Vorspanneinrichtung einen Pneumatikzylinder 21 aufweist. Der Pneumatikzylinder 21 dient dabei ebenfalls der Vorspannung des Schwingungsgebers 12 und dient zusammen mit den Massen 17 und 18 dem Ausgleich der dynamischen Reaktionskräfte. Alternativ ist auch ein Pneumatikzylinder einsetzbar, dessen Vorspannung variierbar ist. Außerdem sind statt der Feder 16 oder des Pneumatikzylinders 21 auch andere dem Fachmann bekannte Bauteile, deren Vorspannung einstellbar oder nicht einstellbar ist, einsetzbar.

Die erfindungsgemäße Vorrichtung ist vorteilhafterweise dazu geeignet, anwendungsabhängig beliebige Formen von Anregungsschwingungen zu erzeugen. Es sind pulsförmige Anregungen wie bei einer Sprenganregung oder der Hammerschlagseismik möglich. Alternativ sind zeitlich begrenzte Schwingungen mit vorbestimmten Amplituden- und/oder Frequenzverläufen anregbar. Es können auch mehrfach Einzelpulse oder Schwingungsverläufe erzeugt werden, die durch die Verwendung des magnetostriktiven Schwingungsgebers 12 reproduzierbar gleichartig gebildet werden. Es kann beispielsweise eine 20fache Wiederholung zur Erzeugung von Stapelsignalen vorgesehen sein.

## Patentansprüche

1. Vorrichtung (10, 20) zur Erzeugung mechanischer Schwingungen in Festgestein mit einem in einem Gehäuse angeordneten, elektrisch angetriebenen Schwingungserzeuger, wobei das Gehäuse eine langgestreckte Form mit einer Längsrichtung besitzt,
**dadurch gekennzeichnet, dass**
- der Schwingungserzeuger einen axial, parallel zur Längsrichtung des Gehäuses wirkenden magnetostriktiven Schwingungsgeber (12) aufweist, und
- eine Vorspanneinrichtung vorgesehen ist, mit der der Schwingungserzeuger in Bezug auf das Gehäuse und das Festgestein mit einem vorbestimmten Anpressdruck angeordnet werden kann.

2. Vorrichtung (10, 20) nach Anspruch 1, **dadurch gekennzeichnet, dass** mit dem Schwingungsgeber (12) Signale mit vorbestimmten Frequenzen und/oder vorbestimmten Frequenzverläufen und/oder vorbestimmten Amplituden einstellbar sind.

3. Vorrichtung (10, 20) nach Anspruch 1 oder 2, **dadurch gekennzeichnet, dass** mit dem Schwingungsgeber (12) stapelbare Signale erzeugbar sind.

4. Vorrichtung (10, 20) nach einem der Ansprüche 1 bis 3, **dadurch gekennzeichnet, dass** an dem Gehäuse (11) an seiner dem Festgestein zugewandten Seite eine Übertragungseinrichtung (14) zur Einleitung der erzeugten Schwingung in das Festgestein angeordnet ist.

5. Vorrichtung (10, 20) nach Anspruch 4, **dadurch gekennzeichnet, dass** an der Übertragungseinrichtung (14) ein Schwingungsaufnehmer angeordnet ist.

6. Vorrichtung (10, 20) nach einem der Ansprüche 1 bis 5, **dadurch gekennzeichnet, dass** mindestens eine Längenmesseinrichtung (101) vorgesehen ist.

7. Vorrichtung (10, 20) nach Anspruch 6, **dadurch gekennzeichnet, dass** die Längenmesseinrichtung (101) mindestens eine Führungseinrichtung aufweist.

8. Vorrichtung (10, 20) nach einem der Ansprüche 1 bis 7, **dadurch gekennzeichnet, dass** mindestens eine Ausgleichsmasse (17, 18) vorgesehen ist.

9. Vorrichtung (10, 20) nach einem der Ansprüche 1 bis 8, **dadurch gekennzeichnet, dass** mindestens eine Feder (16) und/oder mindestens ein Pneumatikzylinder (21) zur Vorspannung des Schwingungsgebers (12) relativ zum Gehäuse vorgesehen ist.

10. Vorrichtung (10, 20) nach einem der Ansprüche 1 bis 9, **dadurch gekennzeichnet, dass** das Gehäuse (11) teleskopartig auseinander- und zusammenschiebbar ist.

11. Vorrichtung (10, 20) nach einem der Ansprüche 1 bis 10, **dadurch gekennzeichnet, dass** sie tragbar ist.

12. Vorrichtung (10, 20) nach einem der Ansprüche 1 bis 11, **dadurch gekennzeichnet, dass** die Vorspanneinrichtung ein Gestell, eine Seilverspannung und/oder eine Arbeitsmaschine umfasst.

13. Vorrichtung (10, 20) nach Anspruch 12, **dadurch gekennzeichnet, dass** sie verschiebbar und/oder schwenkbar mit dem Gestell, der Seilverspannung und/oder der Arbeitsmaschine verbunden ist.

14. Verfahren zur Erzeugung mechanischer Schwingungen in Festgestein mit einer Vorrichtung (10, 20) nach einem der Ansprüche 1 bis 13, **gekennzeichnet durch** folgende Schritte:
- Anlegen der Vorrichtung (10, 20) unmittelbar an das zu untersuchende Festgestein,
- Vorspannen des Schwingungsgebers (12) mit einem vorbestimmten Anpressdruck, und
- Aktivieren des Schwingungsgebers (12), so dass im Festgestein eine Schwingungsanregung erfolgt, die axial parallel zur Längsrichtung des Gehäuses gerichtet ist.

15. Verfahren gemäß Anspruch 14, bei dem mechanische Schwingungen mit einem vorbestimmten Zeitverlauf, einer vorbestimmten Frequenz, einer vorbestimmten Amplitude und/oder einem vorbestimmten Frequenz- oder Amplitudenverlauf erzeugt werden.

16. Verfahren gemäß Anspruch 14 oder 15, bei dem das Vorspannen des Schwingungsgebers (12) mit einem Gestell, einer Seilverspannung und/oder eine Arbeitsmaschine erfolgt.

17. Verwendung einer Vorrichtung nach einem der Ansprüche 1 bis 13 als Signalgenerator zur Erzeugung mechanischer Schwingungen in Festgestein beim Untertagebau oder in der Tunnelseismik.

## Claims

1. A device (10, 20) for generating mechanical vibrations in hard rock, comprising an electrically driven vibration generator arranged in a housing, the housing having an elongated shape with a longitudinal direction,
**characterized in that**
- the vibration generator comprises a magnetostriction oscillator (12) acting axially parallel to the longitudinal direction of the housing, and
- a pre-stressing device is provided, which serves to position the vibration generator with a predefined contact pressure in relation to the housing and the hard rock.

2. The device (10, 20) according to Claim 1, **characterized in that** the oscillator (12) is capable of setting signals with predetermined frequencies and/or predetermined frequency profiles and/or predetermined amplitudes.

3. The device (10, 20) according to Claim 1 or 2, **characterized in that** the oscillator (12) is capable of generating stackable signals.

4. The device (10, 20) according to any one of Claims 1 to 3, **characterized in that** a transmission device (14) for introducing the generated vibrations into the hard rock is arranged on the side of the housing (11) facing the hard rock.

5. The device (10, 20) according to Claim 4, **characterized in that** a vibration receiver is arranged on the transmission device (14).

6. The device (10, 20) according to any one of Claims 1 to 5, **characterized in that** at least one length measuring device (101) is provided.

7. The device (10, 20) according to Claim 6, **characterized in that** the length measuring device (101) has at least one guide device.

8. The device (10, 20) according to any one of Claims 1 to 7, **characterized in that** at least one counterweight (17, 18) is provided.

9. The device (10, 20) according to any one of Claims 1 to 8, **characterized in that** at least one spring (16) and/or at least one pneumatic cylinder (21) is provided for pre-stressing the oscillator (12) in relation to the housing.

10. The device (10, 20) according to any one of Claims 1 to 9, **characterized in that** the housing (11) is telescopically expandable and collapsible.

11. The device (10, 20) according to any one of Claims 1 to 10 **characterized in that** it is portable.

12. The device (10, 20) according to any one of Claims 1 to 11 **characterized in that** the pre-stressing device comprises a frame, a cable bracing and/or a machine.

13. The device (10, 20) according to Claim 12, **characterized in that** it is displaceably and/or pivotally connected to the frame, the cable bracing and/or the machine.

14. A method for generating mechanical vibrations in hard rock by means of a device (10, 20) according to any one of Claims 1 to 13, **characterized by** the following steps:
- application of the device (10, 20) directly to the hard rock to be analysed,
- pre-stressing of the oscillator (12) with a predefined contact pressure, and
- activation of the oscillator (12), so that vibrations are excited in the hard rock axially parallel to the longitudinal direction of the housing.

15. The method according to Claim 14, wherein mechanical vibrations with a predetermined time profile, a predetermined frequency, a predetermined amplitude and/or a predetermined frequency or amplitude profile are generated.

16. The method according to Claim 14 or 15, wherein the oscillator (12) is prestressed by means of a frame, a cable bracing and/or a machine.

17. Use of a device according to any one of Claims 1 to 13 as signal generator for generating mechanical vibrations in hard rock in underground mining or in tunnel seismology.

## Revendications

1. Dispositif (10, 20) destiné à générer des vibrations mécaniques dans des roches, comportant un générateur de vibrations, monté dans un carter et actionné électriquement, le carter ayant une forme allongée avec une direction longitudinale, **caractérisé en ce que**
- le générateur de vibrations comporte un émetteur de vibrations magnétostrictif, agissant dans le sens axial parallèlement à la direction longitudinale du carter, et
- un dispositif de précontrainte est prévu, par lequel le générateur de vibrations peut être agencé par rapport au carter et à la roche avec une pression d'appui prédéterminée.

2. Dispositif (10, 20) selon la revendication 1, **caractérisé en ce que** des signaux avec des fréquences prédéterminées et / ou des variations de fréquences prédéterminées et / ou des amplitudes prédéterminées peuvent être réglés avec l'émetteur de vibrations (12).

3. Dispositif (10, 20) selon la revendication 1 ou 2, **caractérisé en ce que** des signaux superposables peuvent être générés avec l'émetteur de vibrations (12).

4. Dispositif (10, 20) selon l'une quelconque des revendications 1 à 3, **caractérisé en ce qu'**un dispositif de transmission (14), destiné à introduire la vibration générée dans la roche, est monté sur le carter (11) sur son côté orienté vers la roche.

5. Dispositif (10, 20) selon la revendication 4, **caractérisé en ce qu'**un récepteur de vibrations est monté sur le dispositif de transmission (14).

6. Dispositif (10, 20) selon l'une quelconque des revendications 1 à 5, **caractérisé en ce qu'**il est prévu au moins un dispositif de mesure de longueur (101).

7. Dispositif (10, 20) selon la revendication 6, **caractérisé en ce que** le dispositif de mesure de longueur (101) comporte au moins un dispositif de guidage.

8. Dispositif (10, 20) selon l'une quelconque des revendications 1 à 7, **caractérisé en ce qu'**il est prévu au moins une masselotte d'équilibrage (17, 18).

9. Dispositif (10, 20) selon l'une quelconque des revendications 1 à 8, **caractérisé en ce qu'**il est prévu au moins un ressort (16) et / ou au moins un vérin pneumatique (21) pour la précontrainte de l'émetteur de vibrations (12) par rapport au carter.

10. Dispositif (10, 20) selon l'une quelconque des revendications 1 à 9, **caractérisé en ce que** le carter (11) peut être déployé et rétracté de manière télescopique.

11. Dispositif (10, 20) selon l'une quelconque des revendications 1 à 10, **caractérisé en ce qu'**il est portable.

12. Dispositif (10, 20) selon l'une quelconque des revendications 1 à 11, **caractérisé en ce que** le dispositif de précontrainte comporte un bâti, un entretoisement de câbles et / ou une machine de travail.

13. Dispositif (10, 20) selon la revendication 12, **caractérisé en ce qu'**il est relié de manière mobile et / ou pivotante avec le bâti, l'entretoisement de câbles et / ou la machine de travail.

14. Procédé destiné à générer des vibrations mécaniques dans des roches, comportant un dispositif (10, 20) selon l'une quelconque des revendications 1 à 13, **caractérisé par** les étapes suivantes :
- mise en appui du dispositif (10, 20) directement contre la roche à examiner,
- précontrainte de l'émetteur de vibrations (12) avec une pression d'appui prédéterminée, et
- activation de l'émetteur de vibrations (12), de telle sorte qu'une vibration est induite dans la roche, laquelle est dirigée dans le sens axial parallèlement à la direction longitudinale du carter.

15. Procédé selon la revendication 14, dans lequel des vibrations mécaniques sont générées avec une propagation dans le temps prédéterminée, une fréquence prédéterminée, une amplitude prédéterminée et / ou une variation de fréquence ou d'amplitude prédéterminée.

16. Procédé selon la revendication 14 ou 15, dans lequel l'émetteur de vibrations (12) est précontraint par un bâti, un entretoisement de câbles et / ou une machine de travail.

17. Utilisation d'un dispositif selon l'une quelconque des revendications 1 à 13, sous la forme de générateur de signaux destiné à générer des vibrations mécaniques dans des roches pendant des travaux de construction souterrains ou dans l'étude sismique des tunnels.
